# EUROPEAN PATENT SPECIFICATION

(11) **EP 3 444 809 B1**
(45) Date of publication and mention of the grant of the patent: **23.09.2020**
(21) Application number: 18172427.9
(22) Date of filing: 15.05.2018
(51) Int. Cl.: G10L 15/22, G10L 15/02, G10L 15/30, G10L 17/26, G10L 25/51, G10L 15/07

(54) **PERSONALIZED SPEECH RECOGNITION METHOD AND SYSTEM**
VERFAHREN UND SYSTEM ZUR PERSONALISIERTEN SPRACHERKENNUNG
PROCÉDÉ ET SYSTÈME DE RECONNAISSANCE VOCALE PERSONNALISÉE

(30) Priority: 14.08.2017 KR 20170103052
(43) Date of publication of application: 20.02.2019
(73) Proprietor: Samsung Electronics Co., Ltd., Gyeonggi-do 16677 (KR)
(72) Inventor: Lee, Hodong, 16678 Gyeonggi-do (KR); Yoo, Sang Hyun, 16678 Gyeonggi-do (KR)
(74) Representative: Grootscholten, Johannes A.M.

(56) References cited:
- WO-A1-2013/169232
- WO-A1-2016/200381
- WO-A1-2017/112813
- US-A1- 2015 149 162
- US-A1- 2015 149 167
- US-A1- 2017 069 314

## Description

### BACKGROUND

### 1. Field

The following description relates to a personalized speech recognition method and a system performing the personalized speech recognition method.

### 2. Description of Related Art

A speech interface is a more natural and intuitive interface than a touch interface. For this reason, the speech interface is emerging as a next-generation interface that may overcome shortcomings of the touch interface. In terms of the speech interface, accuracy of speech recognition technology is important. As various techniques for improving the accuracy of speech recognition technology have been proposed, speech recognition technology is gradually evolving.

US2015/0149167 A1 describes a distributed speech recognition approach performing user and acoustic specific condition transforms. US2017/0069314 A1 describes a client-server architecture with acquisition of speech characteristics to identify an appropriate language model for recognition. WO2016/200381 A1 describes a further client-server architecture whereby speech recognition is performed in accordance with an estimated motion profile. WO2017/112813 A1 describes the use of a set of speaker-adapted models. WO2013/169232 A1 describes a speaker-dependent feature adaptation approach.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is defined by the appended independent claims, with the dependent claims defining further preferred embodiments.

Other features and aspects will be apparent from the following detailed description, the drawings, and the claims.

### BRIEF DESCRIPTION OF THE DRAWINGS

FIG. 1 illustrates an example of a relationship between a user terminal and a server.
FIG. 2 illustrates an example of a procedure of recognizing a speech signal input to a user terminal.
FIG. 3 illustrates an example of a procedure of recognizing a target speech signal based on a characteristic parameter and a model for speech recognition.
FIG. 4 illustrates an example of a procedure of recognizing a speech signal additionally based on environment information, in accordance with the invention. .
FIG. 5 illustrates an example of environment information.
FIG. 6 illustrates an example of a recognition method of a user terminal.
FIG. 7 illustrates an example of a user terminal.
FIG. 8 illustrates an example of a server.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

The following examples are used for speech recognition.

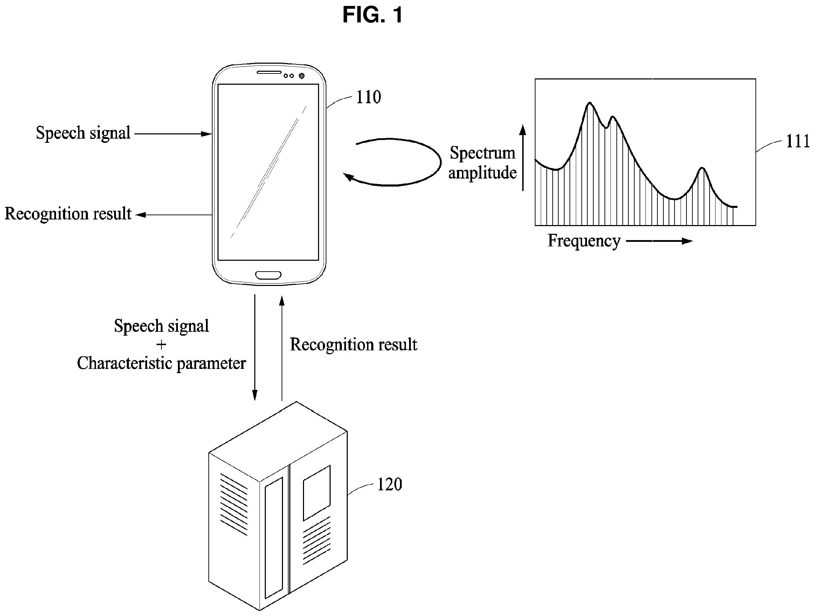

FIG. 1 illustrates an example of a relationship between a user terminal and a server.

FIG. 1 illustrates a user terminal 110 and a server 120.

The user terminal 110 is a device for receiving an input of a speech signal from a user and outputting a recognition result of the speech signal. The user terminal 110 includes a memory configured to store instructions for any one or any combination of operations described later and a processor configured to execute the instructions. The user terminal 110 may be implemented as products in various forms, for example, a personal computer (PC), a laptop computer, a tablet computer, a smartphone, a mobile device, a smart speaker, a smart television (TV), a smart home appliance, a smart vehicle, and a wearable device.

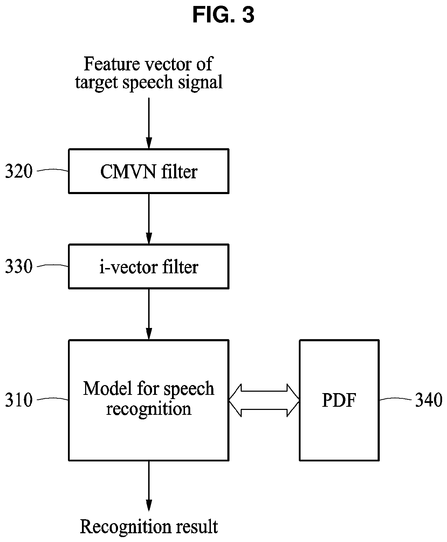

The user terminal 110 determines a characteristic parameter 111 personalized to a speech of a user based on a speech signal input by the user. The characteristic parameter 111 is additional information required for personalization of speech recognition. The characteristic parameter 111 is used to perform speech recognition personalized to a user manipulating the user terminal 110 instead of directly changing a model for the speech recognition. The characteristic parameter 111 includes any one or any combination of, for example, normalization information based on cepstral mean and variance normalization (CMVN), an i-vector, and a probability density function (PDF). The characteristic parameter 111 will be described in more detail with reference to FIG. 3.

The user terminal 110 determines the characteristic parameter 111 before the speech recognition is requested. Hereinafter, speech information used to determine the characteristic parameter 111 may be referred to as a reference speech signal, and a speech signal to be recognized may be referred to as a target speech signal.

When a target speech signal corresponding to a target of recognition is input from the user, the user terminal 110 transmits the target speech signal and the characteristic parameter 111 to a server 120.

The server 120 includes a model for speech recognition and may be, for example, a computing device for performing speech recognition on the target speech signal received from the user terminal 110 using the model. The server 120 performs the speech recognition on the target speech signal received from the user terminal 110 and transmits a recognition result of the target speech signal to the user terminal 110.

The model is a neural network configured to output a recognition result of a target speech signal in response to the target speech signal being input, and may be a general purpose model for speech recognition of a plurality of users instead of speech recognition customized for an individual user.

The server 120 performs speech recognition personalized to a speech of a user using the general purpose model based on the characteristic parameter 111 personalized to the speech of the user. In general, an individual user has a unique accent, tone, and expression. By using the characteristic parameter 111, the speech recognition is performed adaptively to such a unique characteristic of the individual user.

The server 120 transmits the recognition result of the target speech signal to the user terminal 110. The user terminal 110 outputs the recognition result.

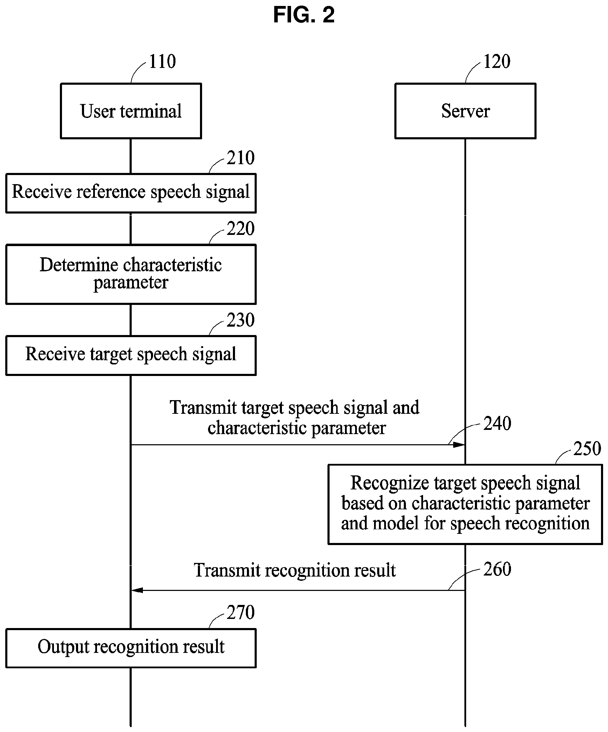

FIG. 2 illustrates an example of a procedure of recognizing a speech signal input to a user terminal.

FIG. 2 illustrates a recognition method performed by the user terminal 110 and the server 120.

In operation 210, the user terminal 110 receives a reference speech signal from a user as an input. The reference speech signal is a speech signal input to the user terminal 110 in response to a user using the user terminal 110 before a target recognition signal to be recognized is input to the user terminal 110. The reference speech signal may be, for example, a speech signal input to the user terminal 110 when the user makes a call or records the user's speech using the user terminal 110. The reference speech signal is not used as a target of speech recognition and may be a speech signal input to the user terminal 110 through a general use of the user terminal 110.

In operation 220, the user terminal 110 determines a characteristic parameter personalized to a speech of the user based on the reference speech signal. The characteristic parameter is a parameter that allows speech recognition personalized to the user to be performed instead of directly changing a model for speech recognition.

The user terminal 110 updates the characteristic parameter based on a reference speech signal each time that the reference speech signal is input. In one example, the user terminal 110 updates the characteristic parameter using all input reference speech signals. In another example, the user terminal updates the characteristic parameters selectively using only reference speech signals satisfying a predetermined condition, for example, a length or an intensity of a speech signal.

The user terminal 110 determines the characteristic parameter by applying a personal parameter acquired from the reference speech signal to a basic parameter determined based on a plurality of users. The basic parameter is an initial parameter determined based on speech signals of the plurality of users and is provided from the server 120. The characteristic parameter is determined by applying a first weight to the personal parameter of the corresponding user and a second weight to the basic parameter and obtaining a sum of the weighted parameters. Also, when a subsequent reference speech signal is input, the characteristic parameter is updated by applying a personal parameter acquired from the subsequent reference speech signal to a recently calculated characteristic parameter.

The characteristic parameter personalized to the speech of the user is accumulatively calculated by determining the characteristic parameter each time that the reference speech signal is input to the user terminal 110. As an accumulated number of characteristic parameters increases, a characteristic parameter more personalized to the corresponding user is acquired.

In another example, instead of determining the characteristic parameter by applying the personal parameter to the basic parameter in the user terminal 110, the user terminal 110 accumulatively calculates the characteristic parameter using only the personal parameter and transmits a result of the calculating to the server 120. In this example, the server 120 determines the characteristic parameter by applying a first weight to the basic parameter and a second weight to the characteristic parameter and obtaining a sum of the weighted parameters.

In operation 230, the user terminal 110 receives a target speech signal to be recognized from the user. The user terminal 110 determines a speech signal input together with a speech recognition command to be the target speech signal.

In operation 240, the user terminal 110 transmits the target speech signal and the characteristic parameter to the server 120 together.

In another example, the user terminal 110 transmits the characteristic parameter to the server 120 in advance of the target speech signal. In this example, the user terminal 110 transmits the characteristic parameter to the server 120 in advance at a preset interval or each time that the characteristic parameter is updated. The characteristic parameter is mapped to the user or the user terminal 110 and stored in the server 120. When the target speech signal is input, the user terminal 110 transmits the target speech signal to the server 120 without the characteristic parameter, and the stored characteristic parameter mapped to the user or the user terminal 110 is retrieved by the server 120.

The characteristic parameter transmitted to the server 120 is numerical information, rather than personal information of the user. Therefore, personal information of the user cannot be exposed during the speech recognition performed in the server 120.

In operation 250, the server 120 recognizes the target speech signal based on the characteristic parameter and a model for speech recognition. The server 120 applies the characteristic parameter to a feature vector input to the model or uses the characteristic parameter as class information for classifying in the model, thereby performing the speech recognition personalized to the user instead of directly changing the model. The speech recognition performed based on the characteristic parameter and the model will be described in greater detail with reference to FIG. 3.

In operation 260, the server 120 transmits a recognition result of the target speech signal to the user terminal 110.

In operation 270, the user terminal 110 outputs the recognition result of the target speech signal. In one example, the user terminal 110 displays the recognition result of the target speech recognition.

Also, the user terminal 110 performs an operation corresponding to the recognition result and outputs a result of the operation. The user terminal 110 executes an application, for example, a phone call application, a contact application, a messenger application, a web application, a schedule managing application, or a weather application installed in the user terminal 110 based on the recognition result, or performs an operation, for example, calling, contact search, schedule check, or weather search, and then outputs a result of the operation.

FIG. 3 illustrates an example of a procedure of recognizing a target speech signal based on a characteristic parameter and a model for speech recognition.

FIG. 3 illustrates a model for speech recognition 310, a CMVN filter 320, an i-vector filter 330, and a PDF 340. Any one or any combination of the CMVN filter 320, the i-vector filter 330, and the PDF 340 may be used, although FIG. 3 illustrates all of the CMVN filter 320, the i-vector filter 330, and the PDF 340.

The model for speech recognition 310 is a neural network that outputs a recognition result of a target speech signal in response to the target speech signal being input. The neural network includes a plurality of layers. Each of the plurality of layers includes a plurality of neurons. Neurons in neighboring layers are connected to each other through synapses. Weights are assigned to the synapses through learning. Parameters include the weights.

A characteristic parameter includes any one or any combination of CMVN normalization information, an i-vector, and a PDF. Such characteristic parameters are applied to the CMVN filter 320, the i-vector filter 330, the PDF 340.

A feature vector of the target speech signal is extracted from the target speech signal as, for example, a Mel-frequency cepstral coefficients (MFCCs) or Mel-scaled filter bank coefficients, and input to the CMVN filter 320.

The CMVN filter 320 normalizes the feature vector of the target speech signal before the speech recognition is performed, thereby increasing a speech recognition accuracy. The CMVN filter 320 allows the speech recognition to be performed robustly in the presence of noise or distortion included in the speech signal. For example, the CMVN filter 320 normalizes an average of the coefficients of the feature vector of the speech signal to be 0, and normalizes a variance of the coefficients of the feature vector to be a unit variance, thereby performing normalization on the feature vector. The normalization information is used for the normalization. The normalization information includes an average value for normalizing the average of the coefficients of the feature vector to 0 and a variance value for normalizing the variance of the coefficients of the feature vector to be the unit variance. The unit variance is, for example, 1.

The normalization information used in the CMVN filter 320 is accumulated in a user terminal. As an accumulated number of normalization information increases, the normalization is more accurately performed in the CMVN filter 320, and thus a performance of the speech recognition increases.

In the i-vector filter 330, an i-vector is applied to the feature vector of the target speech signal. The i-vector is an identification vector and indicates a unique characteristic of a user. Information for identifying a user uttering a target speech signal is expressed as a vector, for example, the identification vector. The identification vector is, for example, a vector for expressing a variability of a Gaussian mixture model (GMM) supervector obtained by connecting average values of Gaussians when a distribution of acoustic parameters extracted from a speech is modeled by a GMM.

The i-vector is determined in the user terminal instead of in a server. Also, an accumulative calculation is performed each time that a reference speech signal is input in the user terminal or each time that a reference speech signal satisfying a predetermined condition is input. This process enables an accurate i-vector to be determined for a pronunciation of the user.

The i-vector determined in the user terminal is applied to the feature vector of the target speech signal through the i-vector filter 330 so as to be input to the model for speech recognition 310. By inputting the i-vector and the feature vector of the target speech signal to the model for speech recognition 310, the speech recognition is performed by applying a speech characteristic of the user identified by the i-vector with increased accuracy.

The model for speech recognition 310 may be a model trained based on i-vectors of a plurality of users. Using the i-vectors input when the speech recognition is performed, a user having a similar characteristic to a current user is determined from the plurality of users that were considered when the model was trained. The speech recognition is performed adaptively based on a result of the determining.

The PDF 340 includes class information for classifying in the model for speech recognition 310. The PDF 340 is information indicating a distribution value of a speech characteristic. A value estimated in the model for speech recognition 310 is compared with the PDF 340 to determine phonemes included in the target speech signal. A recognition result is determined based on a result of the determining.

Even when the same word is uttered, an accent or a tone may differ for each user. Speech recognition personalized to the user is performed using the PDF 340 personalized to the user. When the speech recognition is performed, the PDF 340 is replaced by a PDF personalized to the user.

The PDF 340 is calculated in the user terminal by performing a scheme of calculation external to the server, such as the GMM, in the user terminal. The PDF 340 is accumulatively calculated by applying personalized class information acquired from a reference speech signal to class information determined based on a plurality of users at an early stage of the calculation.

Also, PDF count information is personalized for use in the speech recognition. The PDF count information indicates a frequency of use of phonemes. A phoneme that is frequently used by a user may be effectively recognized using the PDF count information. The PDF count information is determined by applying personalized PDF count information acquired from a reference speech signal to PDF count information determined based on a plurality of users at an early stage of calculation.

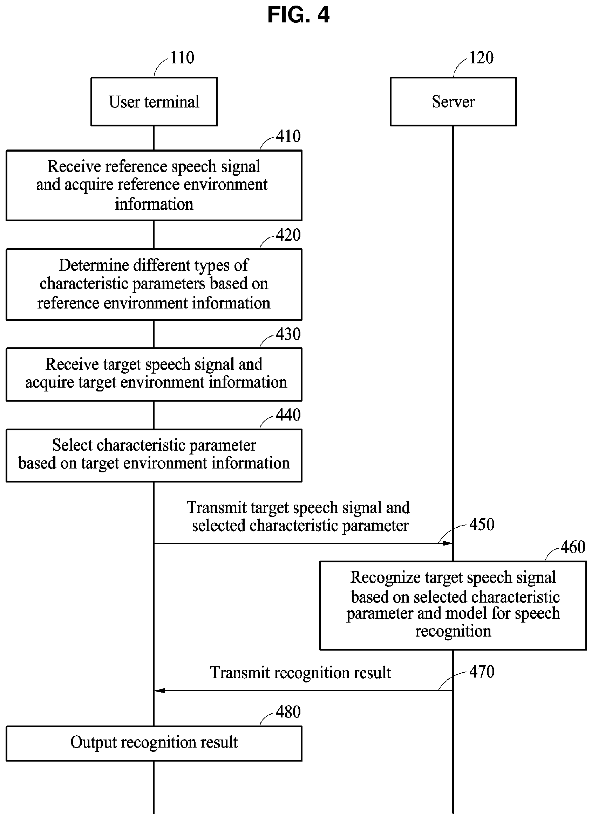

FIG. 4 illustrates an example of a procedure of recognizing a speech signal additionally based on environment information in accordance with the invention. .

FIG. 4 illustrates a recognition method performed by the user terminal 110 and the server 120.

In operation 410, the user terminal 110 receives a reference speech signal from a user as an input and acquires reference environment information at the same time. The reference environment information is information about a situation in which the reference speech signal is input to the user terminal 110. The reference environment information includes either one or both of noise information about noise included in the reference speech signal and distance information indicating a distance from the user terminal 110 to a user uttering the reference speech signal.

The noise information indicates whether the reference speech signal is input in an indoor area or an outdoor area. The distance information indicates whether the distance between the user terminal 110 and the user is a short distance or a long distance.

The reference environment information is acquired by, for example, a separate sensor included in the user terminal 110.

In operation 420, the user terminal 110 determines different types of characteristic parameters based on the reference environment information. For example, an indoor type characteristic parameter is determined based on a reference speech signal input in the indoor area, and an outdoor type characteristic parameter is determined based on a reference speech signal input in the outdoor area. Similarly, a short distance type parameter is determined based on a reference speech signal input from a short distance, and a long distance type parameter is determined based on a reference speech signal input from a long distance.

The user terminal 110 updates each of the types of the characteristic parameters based on the reference environment information.

In operation 430, the user terminal 110 receives a target speech signal to be recognized from the user as an input and acquires target environment information at the same time. The user terminal 110 determines a speech signal input together with a speech recognition command to be the target speech signal, and determines, to be the target environment information, environment information acquired at the same time.

In operation 440, the user terminal 110 selects a characteristic parameter based on the target environment information. The user terminal 110 selects a characteristic parameter corresponding to the target environment information from characteristic parameters stored for each type of characteristic parameter. For example, when the target speech signal is input in the indoor area, an indoor type characteristic parameter is selected from the characteristic parameters based on the target environment information. Similarly, when the target speech signal is input from a short distance, a short distance type characteristic parameter is selected from the characteristic parameters based on the target environment information.

In operation 450, the user terminal 110 transmits the target speech signal and the selected characteristic parameter to the server 120.

In operation 460, the server 120 recognizes the target speech signal based on the selected characteristic parameter and a model for speech recognition.

In operation 470, the server 120 transmits a recognition result of the target speech signal to the user terminal 110.

In operation 480, the user terminal 110 outputs the recognition result of the target speech signal. In one example, the user terminal 110 displays the recognition result of the target speech signal. Also, the user terminal 110 performs an operation corresponding to the recognition result and outputs a result of the operation.

The description of FIGS. 1 through 3 is also applicable to FIG. 4, so the description of FIGS. 1 through 3 will be not be repeated.

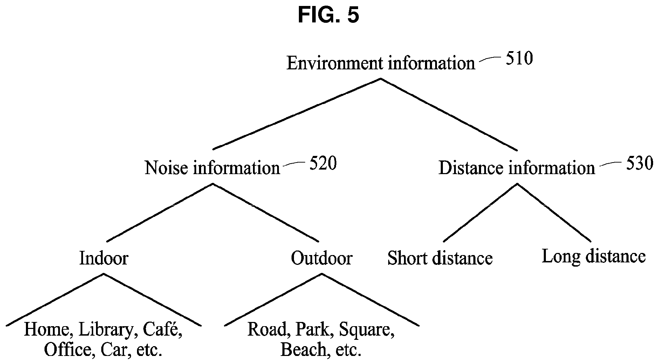

FIG. 5 illustrates an example of environment information.

Referring to FIG. 5, environment information 510 includes either one or both of noise information 520 and distance information 530. However, this is merely one example, and the environment information 510 is not limited to the information illustrated in FIG. 5. Any information about an environment in which a speech signal is input to a user terminal is applicable.

The noise information 520 is information about noise included in a speech signal. Since a type of noise included in a speech signal varies based on a location of a user in general, the noise information 520 indicates whether the speech signal is input in an indoor area or an outdoor area. When the speech signal is input in the indoor area, the noise information 520 more accurately indicates the indoor area, for example, home, a library, a café, an office, a car, etc. When the speech signal is input in the outdoor area, the noise information 520 more accurately indicates the outdoor area, for example, a road, a park, a square, a beach, etc.

The distance information 530 is information indicating a distance from a user terminal to a user uttering a speech signal. The distance information 530 indicates whether the speech signal is input from a short distance or a long distance. When the user speaks toward the user terminal positioned close to a mouth of the user, the distance information 530 indicates that the speech signal is input from the short distance. When the user speaks toward the user terminal, for example, a smart speaker, located a predetermined distance or more from the user, the distance information 530 indicates that the speech signal is input from the long distance.

The distance information 530 may indicate the distance as a numerical value instead of merely a short distance and a long distance.

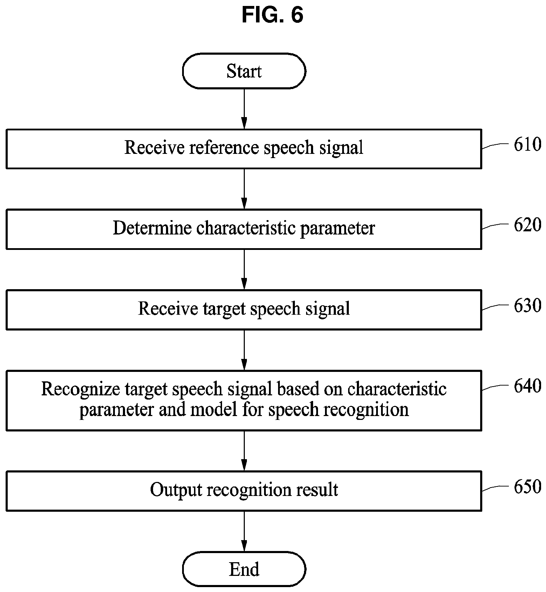

FIG. 6 illustrates an example of a recognition method of a user terminal.

FIG. 6 illustrates a recognition method performed in a user terminal. The foregoing description is based on a case in which a model for speech recognition is included in a server. In another example, the model for speech recognition is included in a user terminal as described in the recognition method of FIG. 6.

In operation 610, a user terminal receives a reference speech signal from a user as an input. The reference speech signal is a speech signal input to the user terminal in response to a user using the user terminal before a target recognition signal to be recognized is input to the user terminal 110.

In operation 620, the user terminal determines a characteristic parameter personalized to a speech of the user based on the reference speech signal. The characteristic parameter is a parameter that allows speech recognition personalized to the user to be performed instead of directly changing a model for speech recognition.

In operation 630, the user terminal receives a target speech signal to be recognized from the user. The user terminal determines a speech signal input together with a speech recognition command to be the target speech signal.

In operation 640, the user terminal recognizes the target speech signal based on the characteristic parameter and a model for speech recognition. The user terminal applies the characteristic parameter to a feature vector input to the model or uses the characteristic parameter as class information for classifying in the model, thereby performing the speech recognition personalized to the user instead of directly changing the model.

In operation 650, the user terminal outputs the recognition result of the target speech signal. For example, the user terminal displays the recognition result of the target speech recognition. Also, the user terminal performs an operation corresponding to the recognition result and outputs a result of the operation.

The description of FIGS. 1 through 3 is also applicable to FIG. 6, so the description of FIGS. 1 through 3 will be not be repeated. Also, although a case in which environment information is additionally used is not described with reference to FIG. 6, the description of FIGS. 4 and 5 in which environment information is additionally used is also applicable to FIG. 6, so the description of FIGS. 4 and 5 will be not be repeated.

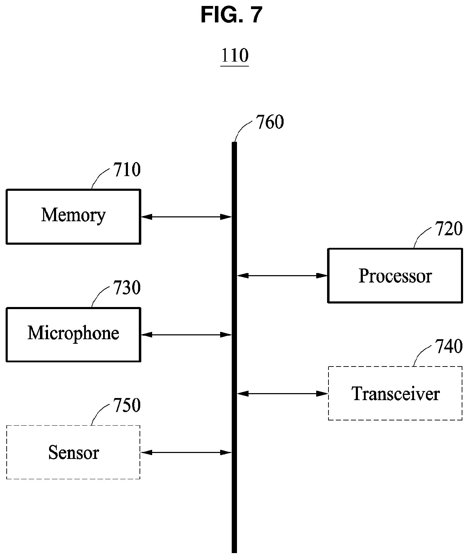

FIG. 7 illustrates an example of a user terminal.

Referring to FIG. 7, the user terminal 110 includes a memory 710, a processor 720, a microphone 730, a transceiver 740, a sensor 750, and a bus 760. The memory 710, the processor 720, the microphone 730, the transceiver 740, and the sensor 750 transmit and receive data to and from one another through the bus 760.

The memory 710 includes a volatile memory and a non-volatile memory and stores information received through the bus 760. The memory 710 stores at least one instruction executable by the processor 720. Also, the memory 710 stores a model for speech recognition when the model for speech recognition is included in the user terminal 110 as described with reference to FIG. 6.

The processor 720 executes instructions or programs stored in the memory 710. The processor 720 determines a characteristic parameter personalized to a speech of a user based on a reference speech signal input by the user, receives a target speech signal input from the user as an input, and outputs a recognition result of the target speech signal. The recognition result of the target speech signal is determined based on the characteristic parameter and a model for speech recognition for recognizing the target speech signal.

The microphone 730 is provided in the user terminal 110 to receive the reference speech signal and the target speech signal as an input.

The transceiver 740 transmits the characteristic parameter and the target speech signal to a server and receives the recognition result of the target speech signal from the server when the model for speech recognition is included in the server as described with reference to FIGS. 2 and 4. The transceiver 740 is not used when the model for speech recognition is included in the user terminal as described with reference to FIG. 6.

The sensor 750 senses environment information that is obtained when a speech signal is input. The sensor 750 is a device for measuring a distance from the user terminal 110 to a user and may be, for example, an image sensor, an infrared sensor, or a light detection and ranging (Lidar) sensor. The sensor 750 outputs an image by capturing an image of a user or senses a flight time of an infrared ray emitted to the user and reflected from the user. Based on data output from the sensor 750, the distance from the user terminal 110 to the user is measured. The sensor 750 need not be used when the environment information is not used as described with reference to FIG. 2.

The description of FIGS. 1 through 6 is also applicable to the user terminal 110, so the description of FIGS. 1 through 6 will not be repeated.

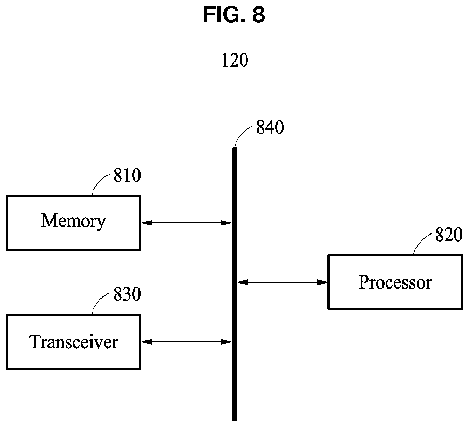

FIG. 8 illustrates an example of a server.

Referring to FIG. 8, the server 120 includes a memory 810, a processor 820, and a transceiver 830, and a bus 840. The memory 810, the processor 820, and the transceiver 830 transmit and receive data to and from one another through the bus 840.

The memory 810 includes a volatile memory and a non-volatile memory and stores information received through the bus 840. The memory 810 stores at least one instruction executable by the processor 820. Also, the memory 810 stores a model for speech recognition.

The processor 820 executes instructions or programs stored in the memory 810. The processor 820 receives a characteristic parameter personalized to a speech of a user determined based on a reference speech signal input by the user from a user terminal, receives a target speech signal corresponding to a target of recognition from the user terminal for speech recognition, recognizes the target speech signal based on the characteristic parameter and the model, and transmits a recognition result of the target speech signal to the user terminal.

The transceiver 830 receives the characteristic parameter and the target speech signal from the user terminal and transmits the recognition result of the target speech signal to the user terminal.

The description of FIGS. 1 through 6 is also applicable to the server 120, so the description of FIGS. 1 through 6 will not be repeated.

The user terminal 110 and the server 120 in FIGS. 1, 2, and 4, the model for speech recognition 310, the CMVN filter 320, the i-vector filter 330, and the PDF 340 in FIG. 3, the user terminal 110, the memory 710, the processor 720, the microphone 730, the transceiver 740, the sensor 750, and the bus 760 in FIG. 7, and the server 120, the memory 810, the processor 820, the transceiver 830, and the bus 840 in FIG. 8 that perform the operations described in this application are implemented by hardware components configured to perform the operations described in this application that are performed by the hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-6 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope defined by the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents inasmuch as falling within the scope defined by the appended claims.

## Claims

1. A speech recognition method, comprising:
a user terminal receiving a reference speech signal from a user as an input and acquiring reference environment information at the same time, the reference environment information including either one or both of noise information about noise included in the reference speech signal and distance information indicating a distance from the user terminal to a user uttering the reference speech signal;
the user terminal determining and storing a characteristic parameter personalized to a speech of a user based on a reference speech signal input by the user, said determining comprising determining different types of characteristic parameters based on the reference environment information;
the user terminal receiving a target speech signal to be recognized from the user as an input and acquiring target environment information at the same time;
the user terminal selecting a characteristic parameter corresponding to the target environment information from characteristic parameters stored for each type of characteristic parameter;
the user terminal transmitting the target speech signal and the selected characteristic parameter to a server,
the server recognizing the target speech signal based on the selected characteristic parameter and a model for speech recognition, and transmitting a recognition result of the target speech signal to the user terminal;
the user terminal, in response, receiving the recognition result of the target speech signal from the server; and
the user terminal outputting the recognition result of the target speech signal,
wherein the characteristic parameters comprise any one or any combination of normalization information to be used for normalizing the target speech signal, identification information indicating a speech characteristic of the user, and class information to be used for classifying in the speech recognition model.

2. The recognition method of claim 1, wherein the reference environment information is acquired by a sensor included in the user terminal.

3. The recognition method of claim 1 or 2, wherein said recognizing the target speech comprises inputting a feature vector of the target speech signal to the model, the method further comprising:
applying the characteristic parameter to the feature vector of the target speech signal to be input to the model.

4. The recognition method of claim 3, wherein the characteristic parameter comprises normalization information to be used for normalizing the feature vector of the target speech signal, wherein said determining a recognition result further comprises normalizing the feature vector of the target recognition signal to be input to the model based on the normalization information; and/or
wherein the characteristic parameter comprises identification information indicating a speech characteristic of the user, wherein said determining a recognition result further comprises inputting the identification information and a feature vector of the target speech signal to the model.

5. The recognition method of any of the previous claims, wherein the characteristic parameter comprises class information to be used for classifying in the model, and
the recognition result of the target recognition signal is additionally determined by comparing a value estimated from a feature vector of the target recognition signal to the class information in the model.

6. The recognition method of any of the previous claims, wherein the determining of the characteristic parameter comprises determining the characteristic parameter by applying a personal parameter acquired from the reference speech signal to a basic parameter determined based on a plurality of users.

7. The recognition method of any of the previous claims, wherein the reference speech signal is a speech signal input to the user terminal in response to the user using the user terminal before the target speech signal is input to the user terminal.

8. The recognition method of any of the previous claims, wherein said model comprises a basic speech recognition model determined for a plurality of users;
wherein said determining a recognition result of the target speech signal further comprises:
applying the characteristic parameter to the basic speech recognition model to obtain a personalized speech recognition model personalized to the user; and
applying the target speech signal to the personalized speech recognition model to obtain a recognition result of the target speech signal.

9. The recognition method of claim 8, wherein the determining of the characteristic parameter comprises:
acquiring a personal parameter determined for the user from the reference speech signal;
applying a first weight to the personal parameter to obtain a weighted personal parameter;
applying a second weight to a basic parameter determined for a plurality of users to obtain a weighted basic parameter; and
obtaining the characteristic parameter based on the weighted personal parameter and the weighted basic parameter.

10. The speech recognition method of claim 8 or 9, wherein the determining of the characteristic parameter comprises accumulatively determining the characteristic parameter each time a reference speech signal is input by the user to the user terminal.

11. System comprising a user terminal (110) and a server (120),
the user terminal (110) comprising:
a first processor (720); and
a first memory (710) storing instructions, that, when executed by the processor, control the processor to perform those steps of the recognition method of any of the claims 1-10 attributed to the user terminal,
the server (120) comprising a second processor (820), and a second memory (810) storing instructions, that, when executed by the second processor (820), control the second processor (820) to perform those steps of the recognition method of any of the claims 1-10 attributed to the server.

## Patentansprüche

1. Verfahren zur Spracherkennung, das Folgendes umfasst:
durch ein Benutzerendgerät Empfangen eines von einem Benutzer stammenden Referenzsprachsignals als Eingabe und gleichzeitig Erfassen von Referenzumgebungsinformationen, wobei die Referenzumgebungsinformationen eines oder beide der Folgenden enthalten: Rauschinformationen über Rauschen, das in dem Referenzsprachsignal enthalten ist, und Distanzinformationen, die eine Distanz von dem Benutzerendgerät zu einem Benutzer, der das Referenzsprachsignal ausspricht, angeben;
durch das Benutzerendgerät Bestimmen und Speichern eines charakteristischen Parameters, der basierend auf einem von einem Benutzer eingegebenen Referenzsprachsignal auf eine Sprache des Benutzers personalisiert ist, wobei das Bestimmen das Bestimmen verschiedener Arten von charakteristischen Parametern basierend auf den Referenzumgebungsinformationen umfasst;
durch das Benutzerendgerät Empfangen, eines von einem Benutzer stammenden zu erkennenden Zielsprachsignals als Eingabe und gleichzeitig Erfassen von Zielumgebungsinformationen;
durch das Benutzerendgerät Auswählen eines charakteristischen Parameters, der den Zielumgebungsinformationen entspricht, aus charakteristischen Parametern, die für jede Art von charakteristischem Parameter gespeichert sind;
durch das Benutzerendgerät Übertragen des Zielsprachsignals und des ausgewählten charakteristischen Parameters an einen Server;
durch den Server Erkennen des Zielsprachsignals basierend auf dem ausgewählten charakteristischen Parameter und einem Modell für die Spracherkennung, und Übertragen eines Erkennungsergebnisses des Zielsprachsignals an das Benutzerendgerät;
als Reaktion Empfangen des von dem Server stammenden Erkennungsergebnisses des Zielsprachsignals durch das Benutzerendgerät; und
durch das Benutzerendgerät Ausgeben des Erkennungsergebnisses des Zielsprachsignals,
wobei die charakteristischen Parameter eine oder eine beliebige Kombination der folgenden umfassen: Normalisierungsinformationen, die zum Normalisieren des Zielsprachsignals verwendet werden sollen, Identifikationsinformationen, die eine Sprachcharakteristik des Benutzers angeben, und Klasseninformationen, die für eine Klassifizierung in dem Spracherkennungsmodell verwendet werden sollen.

2. Erkennungsverfahren nach Anspruch 1, wobei die Referenzumgebungsinformationen von einem in dem Benutzerendgerät enthaltenen Sensor erfasst werden.

3. Erkennungsverfahren nach Anspruch 1 oder 2, wobei das Erkennen des Zielsprachsignals das Eingeben eines Merkmalsvektors des Zielsprachsignals in das Modell umfasst, wobei das Verfahren weiterhin Folgendes umfasst:
Anwenden des charakteristischen Parameters auf den Merkmalsvektor des Zielsprachsignals, der in das Modell eingegeben werden soll.

4. Erkennungsverfahren nach Anspruch 3, wobei der charakteristische Parameter Normalisierungsinformationen umfasst, die für eine Normalisierung des Merkmalsvektors des Zielsprachsignals verwendet werden sollen, wobei das Bestimmen eines Erkennungsergebnisses weiterhin das Normalisieren des in das Modell einzugebenden Merkmalsvektors des Zielerkennungssignals basierend auf den Normalisierungsinformationen umfasst; und/oder wobei der charakteristische Parameter Identifikationsinformationen umfasst, die eine Sprachcharakteristik des Benutzers angeben, wobei das Bestimmen eines Erkennungsergebnisses weiterhin das Eingeben der Identifikationsinformationen und eines Merkmalsvektors des Zielsprachsignals in das Modell umfasst.

5. Erkennungsverfahren nach einem der vorhergehenden Ansprüche, wobei der charakteristische Parameter Klasseninformationen umfasst, die für eine Klassifizierung in dem Modell verwendet werden sollen, und
wobei das Erkennungsergebnis des Zielerkennungssignals zusätzlich durch Vergleichen eines aus einem Merkmalsvektor des Zielerkennungssignals geschätzten Werts mit den Klasseninformationen in dem Modell bestimmt wird.

6. Erkennungsverfahren nach einem der vorhergehenden Ansprüche, wobei das Bestimmen des charakteristischen Parameters Folgendes umfasst: Bestimmen des charakteristischen Parameters durch Anwenden eines aus dem Referenzsprachsignal erfassten persönlichen Parameters auf einen basierend auf einer Vielzahl von Benutzern bestimmten Basisparameter.

7. Erkennungsverfahren nach einem der vorhergehenden Ansprüche, wobei es sich bei dem Referenzsprachsignal um ein Sprachsignal handelt, das in das Benutzerendgerät eingegeben wurde als Reaktion darauf, dass der Benutzer das Benutzerendgerät verwendet, und zwar bevor das Zielsprachsignal in das Benutzerendgerät eingegeben wird.

8. Erkennungsverfahren nach einem der vorhergehenden Ansprüche, wobei das Modell ein für eine Vielzahl von Benutzern bestimmtes Basisspracherkennungsmodell umfasst;
wobei das Bestimmen eines Erkennungsergebnisses des Zielsprachsignals weiterhin Folgendes umfasst:
Anwenden des charakteristischen Parameters auf das Basisspracherkennungsmodell, um ein personalisiertes Spracherkennungsmodell zu erhalten, das auf den Benutzer personalisiert ist; und
Anwenden des Zielsprachsignals auf das personalisierte Spracherkennungsmodell, um ein Erkennungsergebnis des Zielsprachsignals zu erhalten.

9. Erkennungsverfahren nach Anspruch 8, wobei das Bestimmen des charakteristischen Parameters Folgendes umfasst:
Erfassen eines für den Benutzer bestimmten persönlichen Parameters aus dem Referenzsprachsignal;
Anwenden einer ersten Gewichtung auf den persönlichen Parameter, um einen gewichteten persönlichen Parameter zu erhalten;
Anwenden einer zweiten Gewichtung auf einen für eine Vielzahl von Benutzern bestimmten Basisparameter, um einen gewichteten Basisparameter zu erhalten; und
Erhalten des charakteristischen Parameters basierend auf dem gewichteten persönlichen Parameter und dem gewichteten Basisparameter.

10. Spracherkennungsverfahren nach Anspruch 8 oder 9, wobei das Bestimmen des charakteristischen Parameters Folgendes umfasst: kumulatives Bestimmen des charakteristischen Parameters jedes Mal, wenn von dem Benutzer ein Referenzsprachsignal in das Benutzerendgerät eingegeben wird.

11. System umfassend ein Benutzerendgerät (110) und einen Server (120),
wobei das Benutzerendgerät (110) Folgendes umfasst:
einen ersten Prozessor (720); und
einen ersten Speicher (710), in dem Anweisungen gespeichert sind, die, wenn sie von dem Prozessor ausgeführt werden, den Prozessor so steuern, dass er die Schritte des Erkennungsverfahrens nach einem der Ansprüche 1 bis 10, die dem Benutzerendgerät zugeordnet sind, ausführt,
wobei der Server (120) einen zweiten Prozessor (820) und einen zweiten Speicher (810) umfasst, in dem Anweisungen gespeichert sind, die, wenn sie von dem zweiten Prozessor (820) ausgeführt werden, den zweiten Prozessor (820) so steuern, dass er die Schritte des Erkennungsverfahrens nach einem der Ansprüche 1 bis 10, die dem Server zugeordnet sind, ausführt.

## Revendications

1. Procédé de reconnaissance vocale, dans lequel :
un terminal utilisateur reçoit, en entrée, un signal vocal de référence en provenance d'un utilisateur et acquiert simultanément des informations d'environnement de référence, les informations d'environnement de référence comprenant des informations de bruit portant sur un bruit présent dans le signal vocal de référence et/ou des informations de distance indiquant la distance entre le terminal utilisateur et un utilisateur prononçant le signal vocal de référence ;
le terminal utilisateur détermine et enregistre un paramètre caractéristique personnalisé à la parole d'un utilisateur compte tenu d'un signal vocal de référence introduit par l'utilisateur, ladite détermination comprenant la détermination de différents types de paramètres caractéristiques compte tenu des informations d'environnement de référence ;
le terminal utilisateur reçoit en entrée, en provenance de l'utilisateur, un signal vocal cible destiné à être reconnu et acquiert simultanément des informations d'environnement cibles ;
le terminal utilisateur sélectionne un paramètre caractéristique correspondant aux informations d'environnement cibles parmi des paramètres caractéristiques enregistrés pour chaque type de paramètre caractéristique ;
le terminal utilisateur transmet le signal vocal cible et le paramètre caractéristique sélectionné auprès d'un serveur ;
le serveur reconnait le signal vocal cible compte tenu du paramètre caractéristique sélectionné et d'un modèle de reconnaissance vocale, et transmet un résultat de reconnaissance du signal vocal cible au terminal utilisateur ;
le terminal utilisateur reçoit en conséquence le résultat de reconnaissance du signal vocal cible en provenance du serveur ; et
le terminal utilisateur produit le résultat de reconnaissance du signal vocal cible,
lesdits paramètres caractéristiques comprenant un ou plusieurs types d'informations suivantes : des informations de normalisation servant à la normalisation du signal vocal cible, des informations d'identification indiquant une caractéristique vocale de l'utilisateur, et des informations de classe servant à une classification dans le modèle de reconnaissance vocale.

2. Procédé de reconnaissance selon la revendication 1, dans lequel les informations d'environnement de référence sont acquises par un capteur présent dans le terminal utilisateur.

3. Procédé de reconnaissance selon la revendication 1 ou 2, dans lequel ladite reconnaissance du signal vocal cible comprend l'introduction d'un vecteur d'attribut du signal vocal cible dans le modèle, le procédé comprenant en outre :
l'application du paramètre caractéristique au vecteur d'attribut du signal vocal cible à introduire dans le modèle.

4. Procédé de reconnaissance selon la revendication 3, dans lequel le paramètre caractéristique comprend des informations de normalisation servant à la normalisation du vecteur d'attribut du signal vocal cible, ladite détermination d'un résultat de reconnaissance comprend en outre la normalisation du vecteur d'attribut du signal de reconnaissance cible destiné à être introduit dans le modèle compte tenu des informations de normalisation ; et/ou
dans lequel le paramètre caractéristique comprend des informations d'identification indiquant une caractéristique vocale de l'utilisateur, ladite détermination d'un résultat de reconnaissance comprenant en outre l'introduction des informations d'identification et d'un vecteur d'attribut du signal vocal cible dans le modèle.

5. Procédé de reconnaissance selon l'une quelconque des revendications précédentes, dans lequel le paramètre caractéristique comprend des informations de classe servant à une classification dans le modèle, et
le résultat de reconnaissance du signal de reconnaissance cible est déterminé en outre par comparaison entre une valeur, estimée à partir d'un vecteur d'attribut du signal de reconnaissance cible, et les informations de classe dans le modèle.

6. Procédé de reconnaissance selon l'une quelconque des revendications précédentes, dans lequel la détermination du paramètre caractéristique comprend la détermination du paramètre caractéristique par application d'un paramètre personnel acquis à partir du signal vocal de référence à un paramètre de base déterminé compte tenu d'une pluralité d'utilisateurs.

7. Procédé de reconnaissance selon l'une quelconque des revendications précédentes, dans lequel le signal vocal de référence est un signal vocal introduit dans le terminal utilisateur en conséquence de l'utilisation, par l'utilisateur, du terminal utilisateur avant que le signal vocal cible ait été introduit dans le terminal utilisateur.

8. Procédé de reconnaissance selon l'une quelconque des revendications précédentes, dans lequel ledit modèle comprend un modèle de reconnaissance vocale de base déterminé pour une pluralité d'utilisateurs ;
ladite détermination d'un résultat de reconnaissance du signal vocal cible comprenant en outre :
l'application du paramètre caractéristique au modèle de reconnaissance vocale de base pour obtenir un modèle de reconnaissance vocale personnalisé à l'utilisateur, et
l'application du signal vocal cible au modèle de reconnaissance vocale personnalisé pour obtenir un résultat de reconnaissance du signal vocal cible.

9. Procédé de reconnaissance selon la revendication 8, dans lequel la détermination du paramètre caractéristique comprend :
l'acquisition d'un paramètre personnel déterminé relativement à l'utilisateur à partir du signal vocal de référence,
l'application d'un premier poids au paramètre personnel afin d'obtenir un paramètre personnel pondéré,
l'application d'un deuxième poids à un paramètre de base déterminé relativement à une pluralité d'utilisateurs afin d'obtenir un paramètre de base pondéré, et
l'obtention du paramètre caractéristique compte tenu du paramètre personnel pondéré et du paramètre de base pondéré.

10. Procédé de reconnaissance vocale selon la revendication 8 ou 9, dans lequel la détermination du paramètre caractéristique comprend la détermination accumulative du paramètre caractéristique chaque fois qu'un signal vocal de référence est introduit par l'utilisateur dans le terminal utilisateur.

11. Système comprenant un terminal utilisateur (110) et un serveur (120),
le terminal utilisateur (110) comprenant :
un premier processeur (720), et
une première mémoire (710) dans laquelle sont enregistrées des instructions qui, lorsqu'elles sont exécutées par le processeur, commandent le processeur de façon à réaliser les étapes du procédé de reconnaissance selon l'une quelconque des revendications 1 à 10 qui sont attribuées au terminal utilisateur,
le serveur (120) comprenant un deuxième processeur (820) et une deuxième mémoire (810) dans laquelle sont enregistrées des instructions qui, lorsqu'elles sont exécutées par le deuxième processeur (820), commandent le deuxième processeur (820) de façon à réaliser les étapes du procédé de reconnaissance selon l'une quelconque des revendications 1 à 10 qui sont attribuées au serveur.
